# EUROPEAN PATENT APPLICATION

(11) **EP 4 461 682 A1**
(43) Date of publication of application: **13.11.2024**
(21) Application number: 24174963.9
(22) Date of filing: 08.05.2024
(51) Int. Cl.: B65H 51/20, B65H 57/12

(54) **WIRE BUFFERS FOR MANUFACTURING**

(30) Priority: 08.05.2023 US 202363500886 P
(71) Applicant: Relativity Space, Inc., Long Beach, CA 90807 (US)
(72) Inventor: REID, Michael, Long Beach, CA 90807 (US); GRUBER, Fritz C., Long Beach, CA 90807 (US); KROL, Jeremy, Long Beach, CA 90807 (US); JOHNS, Jenna, Long Beach, CA 90807 (US)
(74) Representative: EIP

(57) **Abstract**

Wire buffer systems that can buffer one or more wires are described. The wire buffer system (300) can include a buffer tube (304). The buffer tube (304) can include entry passages (312), exit passages (314), an outer cylinder (308), and an inner cylinder (306). The inner cylinder (306) can be fixed in a position coaxial with the outer cylinder (308). Flexible wire guides (310) can be coupled to the entry passage (312). The flexible wire guide (310) can extend in a spiral around the inner cylinder (306) and exit the buffer tube (304) through the exit passage (314). The wire buffer systems can further include measurement systems (302). The measurement systems (302) can include time-of-flight (TOF) sensors, linear rails, and carriages.

## Description

### FIELD OF THE INVENTION

This application generally relates to systems and methods for wire buffers. More specifically, this application relates to wire buffer systems for additive manufacturing and the methods thereof.

### BACKGROUND

Wire buffering is often used to improve accuracy for wire advancement in Wire Arc Additive Manufacturing (WAAM) applications. Wire buffering allows a supply of wire to be available to an end effector. This can be advantageous for reducing backlash and improving accuracy of an output.

### SUMMARY OF THE INVENTION

Systems and methods in accordance with some embodiments of the invention are directed to wire buffer systems for additive manufacturing.

Some embodiments include a wire buffer capable of buffering one or more wires, the wire buffer comprising: a buffer tube, the buffer tube comprising: an entry passage; an exit passage; an outer cylinder; an inner cylinder fixed in a position coaxial with the outer cylinder; and a flexible wire guide coupled to the entry passage, the flexible wire guide extending in a spiral around the inner cylinder and exiting the buffer tube through the exit passage; wherein the flexible wire guide occupies a space between the outer cylinder and the inner cylinder; and a measurement head configured to measure an amount of wire in the wire buffer.

In some embodiments, the exit passage is rotated greater than or equal to 0 degree and less than or equal to 180 degrees relative to the entry passage.

In some embodiments, the flexible wire guide can translate relative to the exit passage.

In some embodiments, the wire buffer is configured to receive the wire through the entry passage and into the flexible wire guide.

Some embodiments further comprise a second entry passage, a second guide tube, and a second exit passage.

In some embodiments, the measurement head comprises a time-of-flight (TOF) sensor; a linear rail, and a carriage fixedly coupled to the flexible wire guide and movably mounted to the linear rail along a measurement axis of the TOF sensor.

Some embodiments further comprise a second TOF sensor, a second linear rail and a second carriage.

In some embodiments, the TOF sensor is configured to measure an amount of the flexible wire guide stored inside the wire buffer.

In some embodiments, the wire buffer is configured to buffer a plurality of wires.

In some embodiments, the wire buffer is configured to buffer a plurality of wires simultaneously.

In some embodiments, the wire buffer is configured to buffer the wire by accumulating the flexible wire guide between the inner cylinder and the outer cylinder.

In some embodiments, the wire buffer is configured to buffer the wire by accumulating the flexible wire guide between the inner cylinder and the outer cylinder, wherein accumulating the flexible wire guide increases a spiral diameter of the flexible wire guide.

In some embodiments, the wire buffer is configured to buffer the wire by accumulating the flexible wire guide between the inner cylinder and the outer cylinder, wherein accumulating the flexible wire guide increases a spiral diameter of the flexible wire guide from 50 mm to 100 mm.

Some embodiments include a wire buffer system for advancing one or more wires into a deposition site, the wire buffer system comprising: a wire buffer; a de-spooling motor configured to feed a wire into the wire buffer; and a motor configured to advance the wire out of the wire buffer; wherein the wire buffer comprising: a buffer tube, the buffer tube comprising: an entry passage; an exit passage; an outer cylinder; an inner cylinder, the inner cylinder fixed in a position coaxial with the outer cylinder; and a flexible wire guide fixedly coupled to the entry passage, the flexible wire guide extending in a spiral around the inner cylinder and exiting the buffer tube through the exit passage and wherein the flexible wire guide occupies a space between the outer cylinder and the inner cylinder; and a measurement head configured to measure an amount of wire in the wire buffer.

In some embodiments, the exit passage is rotated greater than or equal to 0 degree and less than or equal to 180 degrees relative to the entry passage.

In some embodiments, the flexible wire guide is configured to translate relative to the exit passage.

In some embodiments, the wire buffer is configured to receive the wire through the entry passage and into the flexible wire guide.

Some embodiments further comprise a second entry passage, a second flexible wire guide, and a second exit passage.

In some embodiments, the measurement head comprises: a TOF sensor, a linear rail, and a carriage fixedly coupled to the flexible wire guide and movably mounted to the linear rail along a measurement axis of the TOF sensor.

Some embodiments further comprise a second TOF sensor, a second linear rail and a second carriage.

In some embodiments, the TOF sensor is configured to measure an amount of flexible wire guide stored inside the wire buffer.

In some embodiments, the wire buffer is configured to buffer a plurality of wires.

In some embodiments, the wire buffer is configured to buffer the wire by accumulating the flexible wire guide between the inner cylinder and the outer cylinder.

In some embodiments, the wire buffer is configured to buffer the wire by accumulating the flexible wire guide between the inner cylinder and the outer cylinder, wherein accumulating the flexible wire guide increases a spiral diameter of the flexible wire guide.

In some embodiments, the wire buffer is configured to buffer the wire by accumulating the flexible wire guide between the inner cylinder and the outer cylinder, wherein accumulating the flexible wire guide increases a spiral diameter of the flexible wire guide from 50 mm to 100 mm.

Some embodiments further comprise a second de-spooling motor.

Some embodiments include a wire buffer system for advancing two or more wires into a deposition site, the wire buffer system comprising: a wire buffer; a first de-spooling motor configured to feed a first wire into the wire buffer; a second de-spooling motor configured to feed a second wire into the wire buffer; a motor configured to advance the first wire and the second wire out of the wire buffer; and wherein the wire buffer comprises: a buffer tube, the buffer tube comprising: a first entry passage; a first exit passage; a second entry passage; a second exit passage; an outer cylinder; an inner cylinder, the inner cylinder fixed in a position coaxial with the outer cylinder; a first flexible wire guide fixedly coupled to the first entry passage, the first flexible wire guide extending in a spiral around the inner cylinder and exiting the buffer tube through the first exit passage and wherein the first flexible wire guide occupies a space between the outer cylinder and the inner cylinder; and a second flexible wire guide fixedly coupled to the second entry passage, the second flexible wire guide extending in a spiral around the inner cylinder and exiting the buffer tube through the second exit passage and wherein the second flexible wire guide occupies a space between the outer cylinder and the inner cylinder; and a measurement head configured to measure an amount of the first wire and the second wire in the wire buffer respectively.

In some embodiments, the first exit passage is rotated from greater than or equal to 0 degree to less than or equal to 180 degrees relative to the first entry passage.

In some embodiments, the first flexible wire guide is configured to translate relative to the first exit passage.

In some embodiments, the wire buffer is configured to receive the first wire through the first entry passage and into the first flexible wire guide.

In some embodiments, the measurement head comprises: a first TOF sensor, a first linear rail, a first carriage fixedly coupled to the first flexible wire guide and movably mounted to the first linear rail along a first measurement axis of the first TOF sensor; and a second TOF sensor, a second linear rail; and a second carriage fixedly coupled to the second flexible wire guide and movably mounted to the second linear rail along a second measurement axis of the second TOF sensor.

In some embodiments, the first TOF sensor is configured to measure an amount of first flexible wire guide stored inside the wire buffer.

In some embodiments, the wire buffer is configured to buffer the first wire by accumulating the first flexible wire guide between the inner cylinder and the outer cylinder and is configured to simultaneously buffer the second wire by accumulating the second flexible wire guide between the inner cylinder and the outer cylinder.

In some embodiments, the wire buffer is configured to buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively.

In some embodiments, the wire buffer is configured to buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively from 50 mm to 100 mm.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description and claims will be more fully understood with reference to the following figures and data graphs, which are presented as exemplary embodiments of the invention and should not be construed as a complete recitation of the scope of the invention.
FIG 1 conceptually illustrates a robotic WAAM system including a wire buffer in accordance with an embodiment.
FIG. 2 conceptually illustrates a robotic WAAM system including a multiwire buffer in accordance with an embodiment.
FIGs. 3A through 3D conceptually illustrate a multiwire buffer in accordance with embodiments.
FIGs. 4A through 4B conceptually illustrate a wire buffer accommodating different amounts of wire storage in accordance with embodiments.
FIG. 5 conceptually illustrates measurement head components in accordance with an embodiment.
FIG. 6 conceptually illustrates a multiwire spiral buffer in accordance with an embodiment.
FIG. 7 conceptually illustrates a chart depicting an amount of wire buffered in a wire buffer in accordance with an embodiment.
FIG. 8 conceptually illustrates a multiwire buffer system in accordance with an embodiment.
FIG. 9 conceptually illustrates a measurement head in accordance with an embodiment.
FIGs. 10A through 10B conceptually illustrate various views of a multiwire buffer with an outer cylinder and flexible wire guide hidden in accordance with embodiments.
FIGs. 11A through 11B conceptually illustrate various views of a multiwire buffer with a final tube hidden in accordance with embodiments.
FIG. 12A conceptually illustrates a process for controlling wire feed rates in accordance with an embodiment.
FIG. 12B conceptually illustrates a computer system in accordance with an embodiment.
FIGs. 13A through 13B conceptually illustrate a single-wire curved buffer suitable for incorporation into a multiwire parallel buffer in accordance with embodiments.
FIG. 14 conceptually illustrates a multiwire parallel curved buffer formed of multiple attached single-wire curved buffers in accordance with an embodiment.

### DETAILED DESCRIPTION

In various embodiments a multiwire buffer can provide many benefits to an additive manufacturing system, such as a wire arc additive manufacturing (WAAM) system. Multiwire buffers can significantly reduce the weight and/or complexity for an additive manufacturing system. In various embodiments, a multiwire buffer can be a wire buffer capable of accumulating and dispensing one or more wires. In some embodiments, the multiwire buffer can accumulate and dispense one wire. In some embodiments, the multiwire buffer can accumulate and dispense more than one wire, such as two wires, or three wires, or four wires, or five wires, or more than 5 wires. In this disclosure, a multiwire buffer and a wire buffer are used interchangeably. A multiwire buffer and/or a wire buffer refer to a wire buffer that can accumulate and dispense at least one wire. In some embodiments, the wires can each be fed into and/or dispensed out of a multiwire buffer by separate actuators. One actuator can be dedicated to a single wire (e.g., actuators not shared by other wires). Multiwire buffers can be useful for reducing the size of systems mounted on a robotic actuator of an additive manufacturing system, for example by eliminating the need to mount multiple dedicated single-wire buffers in favor of a multiwire buffer.

Multiwire buffers can, in some embodiments, enable higher mass deposition rates by enabling use of multiple wires. In several embodiments, using exotic alloys can require more wires; multiwire buffers can enable high entropy alloy development that requires accurately controlling many metal alloys entering a melt pool independently and dynamically. In some embodiments, one multiwire alloy can be deposited as follows:
- Buffered wire 1: alloy 1 (an Al and Sc based alloy) deposited at about 1 inch per second.
- Buffered wire 2: alloy 2 (an Al and Mg based alloy) deposited at about 2 inches per second.
- Buffered wire 3: alloy 3 (an Al based alloy) deposited at about 4 inches per second.
- Buffered wire 4: alloy 4 (a Ni based alloy) deposited at about 8 inches per second.

This allows for the dynamic change of alloys to sample an alloy space in a time efficient manner. In several embodiments, multiwire buffers also enable greater deposition speed:
- Buffered wire 1 can be deposited at about 8 inches per second.
- Buffered wire 2 can be deposited at about 8 inches per second.
- Buffered wire 3 can be deposited at about 8 inches per second.
- Buffered wire 4 can be deposited at about 8 inches per second.

The above deposit rates in accordance with some embodiments provide the total mass deposited at about 32 inches per second, which may be considerably higher than rates available with conventional buffering techniques.

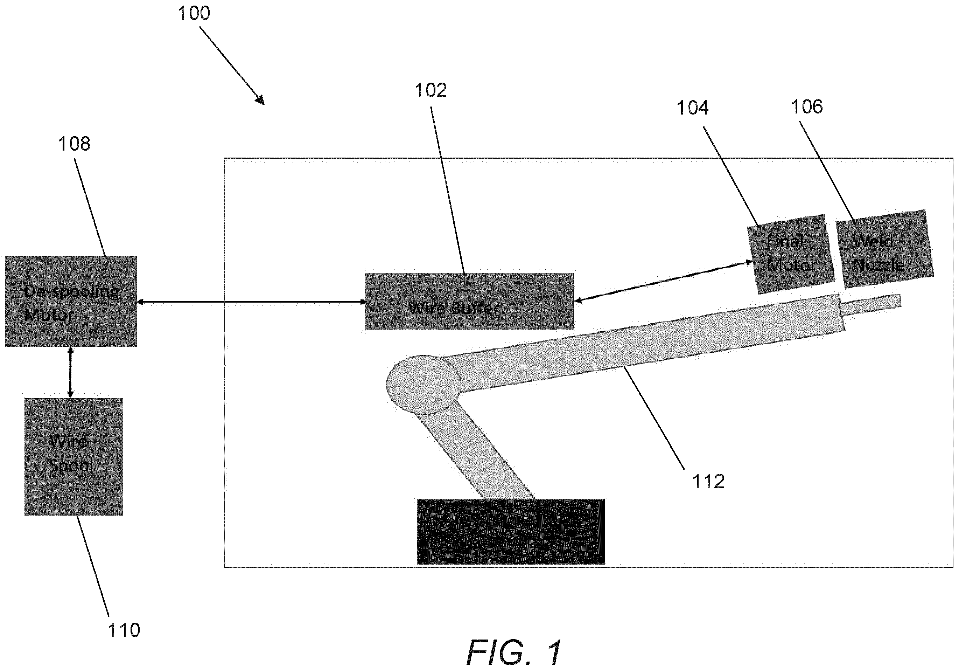

Now turning to the figures. In various embodiments, a robotic WAAM system can include a wire buffer mounted to a robotic arm. A robotic WAAM system including a wire buffer is conceptually illustrated in FIG. 1 in accordance with an embodiment. A robotic WAAM system 100 can include a wire buffer 102, a final motor 104, a weld nozzle 106, a de-spooling motor 108, a wire spool 110 and a robotic arm 112. The de-spooling motor 108 can receive a feed of wire from the wire spool 110. The wire buffer 102 can receive a feed of wire from the de-spooling motor 108. Wire buffer 102 can store an amount of wire. The wire stored in the wire buffer 102 can be used to provide wire to the final motor 104. Storing wire in a buffer can improve the accuracy of print because the wire can be advanced towards a point of interest (e.g., a weld pool) with accuracy. The buffer aids with this at least by reducing a force required to be applied by the final motor 104 as compared to de-spooling the wire using the final motor 104. The final motor 104 can provide a wire supply to the weld nozzle 106. The wire buffer 102, the final motor 104, and the weld nozzle 106 can be mounted to the robotic arm 112.

While specific assemblies, processes and/or systems for a robotic WAAM system including a wire buffer are described above, any of a variety of assemblies, processes and/or systems can be utilized as a robotic WAAM system including a wire buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a robotic WAAM system including a wire buffer, the techniques disclosed herein may be used in any type of additive manufacturing system. The techniques disclosed herein may be used within any of the wire buffers and/or other components as described herein.

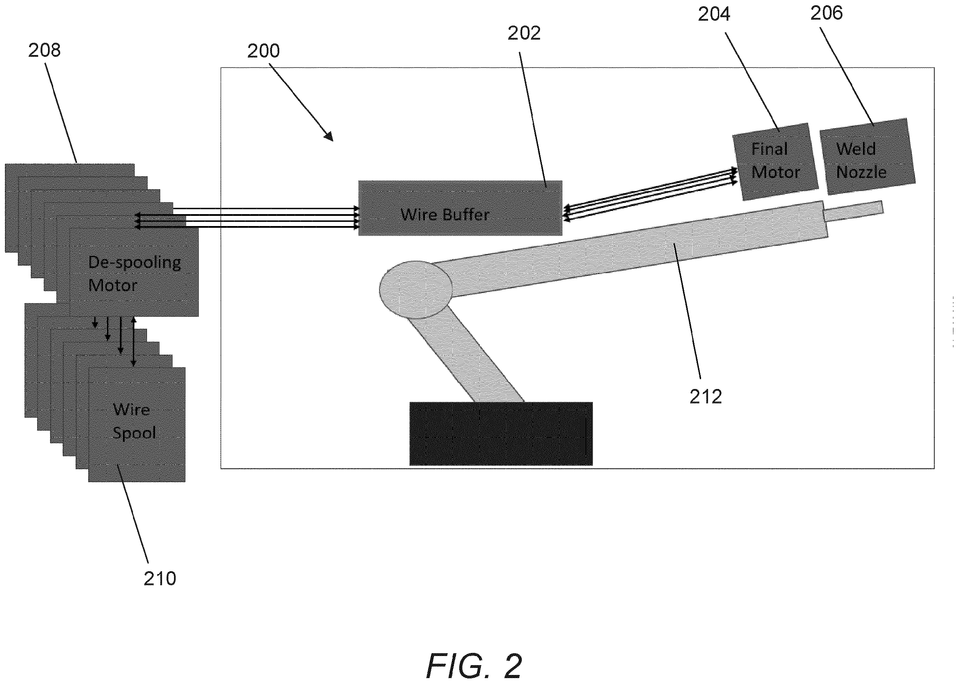

In accordance with various embodiments of the invention, a multiwire buffer can be used to allow a robotic welding system to perform WAAM using a plurality of wires through a single buffer. A robotic WAAM system including a multiwire buffer is conceptually illustrated in FIG. 2 in accordance with an embodiment. A robotic WAAM system 200 can include a multiwire buffer 202, a final motor 204, a weld nozzle 206, one or more de-spooling motors 208, one or more wire spools 210 and a robotic arm 212. The one or more de-spooling motors 208 can each receive a feed of wire (e.g., on a one-to-one basis) from one or more wire spools 210.

The multiwire buffer 202 can receive a feed of wire from each of the one or more de-spooling motors 208. De-spooling motors can be coupled to, and de-spool wire from, wire spools. A wire mounted on a wire spool can be de-spooled by a de-spooling motor (e.g., a dedicated de-spooling motor). One or more wires de-spooled can be simultaneously or sequentially buffered in a multiwire buffer. One or more wires can be pulled from a multiwire buffer by one or more final motors for use in the weld nozzle. In various embodiments a single final motor can advance a plurality of wires. The single final motor can advance the plurality of wires at a rate which is the same among the plurality of wires. In some embodiments, a plurality of final motors can advance a plurality of wires at a single rate or at a plurality of rates. Wires can be fed through a weld nozzle at a controlled rate (e.g., controlled by the final motor) to perform WAAM.

While specific assemblies, processes and/or systems for a robotic WAAM system including a multiwire buffer are described above, any of a variety of assemblies, processes and/or systems can be utilized as a robotic WAAM system including a multiwire buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a robotic WAAM system including a multiwire buffer, the techniques disclosed herein may be used in any type of additive manufacturing system. The techniques disclosed herein may be used within any of the wire buffers and/or other components as described herein.

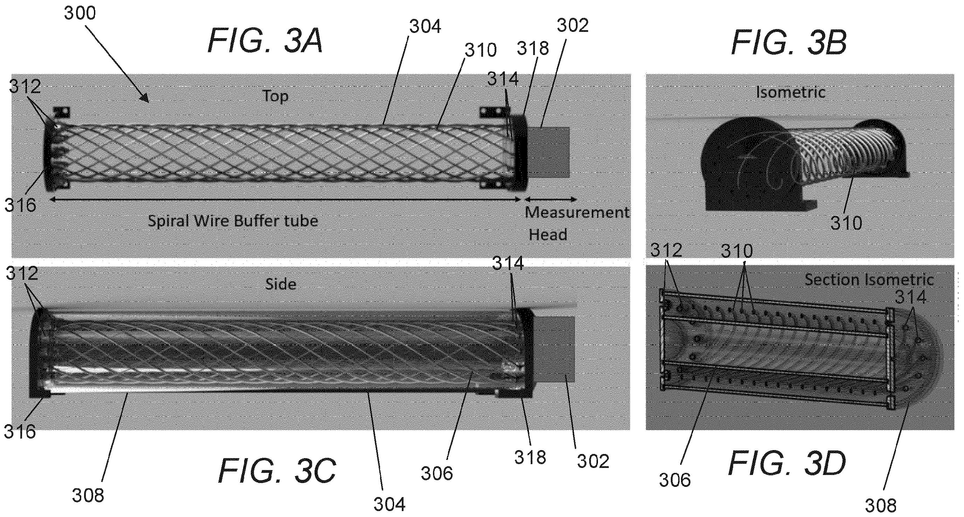

In some embodiments, a multiwire buffer can accumulate and dispense a plurality of wires. A multiwire buffer is conceptually illustrated in FIGs. 3A-3D in accordance with an embodiment. A wire buffer 300 can include a measurement head 302 and a multiwire buffer tube 304. Measurement heads are discussed in greater detail elsewhere herein.

The multiwire buffer tube 304 can include an inner cylinder 306, an outer cylinder 308, one or more flexible wire guides 310, one or more wire entry passages 312, one or more wire exit passages 314, a proximal end cap 316, and a distal end cap 318. In various embodiments an inner cylinder can be concentrically positioned within an outer cylinder. In other words, the inner cylinder and the outer cylinder can have a common central axis. An inner cylinder can be substituted by an inner structure (e.g., a bar, an extension, and/or others). In various embodiments an inner structure can improve tangling performance of the flexible wire guides. An inner cylinder and an outer cylinder can have about equal lengths. The inner cylinder and/or the outer cylinder can, in many embodiments, can be attached at a proximal end and/or a distal end to a proximal end cap and/or a distal end cap respectively.

The multiwire buffer tube 304 can include a number (e.g., about 12; or more than about 12; or less than about 12) of flexible wire guides 310, a number (e.g., about 12; or more than about 12; or less than about 12) of wire entry passages 312, and a number (e.g., about 12; or more than about 12; or less than about 12) of wire exit passages 314. A flexible wire guide can be configured to allow a wire (e.g., a wire for WAAM) to be advanced through the flexible wire guide. The flexible wire guides can be fixedly coupled to corresponding wire entry passages 312. This can be achieved by mechanical means. The flexible wire guides 310 can move through the wire exit passages 314. The amount of flexible wire guide inside a multiwire buffer tube can be a variable amount. The amount of flexible wire guide inside a multiwire buffer tube can correspond to an amount of wire stored inside a wire buffer (e.g., a multiwire buffer).

In accordance with embodiments of the invention, the flexible wire guide can enter the multiwire buffer tube through a wire entry passage. The flexible wire guide can translate through (e.g., translate relative to) the wire exit passage. The flexible wire guide can spiral around an inner structure (e.g., inner cylinder) and/or can be fixed to a wire entry passage. A wire exit passage and an entry passage both corresponding to a common flexible wire guide can, in various embodiments, be offset by an amount. The offset can be from about 0 degree to about 180 degrees; or greater than or equal to about 0 degree; or less than or equal to about 180 degrees. The offset can be an offset around a circumference. In some embodiments, wire buffers with about 0 degree offset can wind around the tube at least once to cause a spiral. In some embodiments, wire buffers with greater than about 0 degree offsets can cause a spiral. In some embodiments, wire buffers with about 0 degree offset and about 0 winding can have no spiral.

While specific assemblies, processes and/or systems for a multiwire buffer are described above, any of a variety of assemblies, processes and/or systems can be utilized as a multiwire buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a multiwire buffer, the techniques disclosed herein may be used in any type of additive manufacturing system. The techniques disclosed herein may be used within any of the wire buffers and/or other components as described herein.

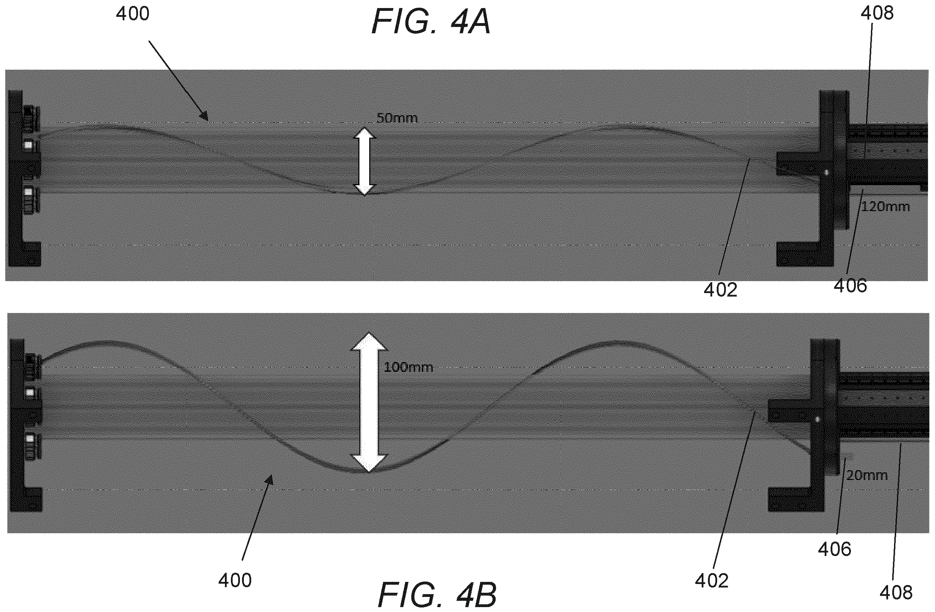

In various embodiments, the amount of wire stored in a wire buffer can correspond to an amount of flexible wire guide pushed into the buffer. A wire buffer accommodating different amounts of wire storage is conceptually illustrated in FIGs. 4A and 4B in accordance with an embodiment. A multiwire buffer 400 can be similar in various aspects to wire buffers as described herein. The multiwire buffer 400 can accommodate a varying amount of flexible wire guide 402 (e.g., flexible wire guide and contained wire). In accordance with many embodiments of the invention, a length of a flexible guide wire 402 inside a multiwire buffer tube (e.g., an amount of buffered wire) can be measured based on a length 406 of the flexible wire guide that is protruding into a measurement head 408.

In numerous embodiments, a wire can be buffered by increasing a length of it stored in a wire buffer. An increased length of wire in a wire buffer can be accommodated by movement of additional flexible wire guide into a multiwire buffer tube. In some embodiments, the flexible wire guide can be pushed away from the center axis of the wire buffer radially when additional flexible wire guide is moved into the multiwire buffer tube to accommodate a longer wire. In such embodiments, a diameter of an internal spiral of the flexible wire guide increases. In some embodiments, the flexible wire guide is closer to the center axis of the wire buffer radially to accommodate a shorter wire. In such embodiments, a diameter of an internal spiral of the flexible wire guide decreases. The dislocation of the flexible wire guide can be between a minimum diameter corresponding to an inner structure (e.g., inner cylinder) and a maximum diameter corresponding to an outer structure (e.g., outer cylinder). FIG 4A shows a flexible wire guide 402 in a first position corresponding to a first diameter (e.g., 50 mm), and a first amount of flexible wire guide outside a multiwire buffer tube. FIG 4B shows a flexible wire guide 402 in a second position corresponding to a second diameter (e.g., 100 mm), and a second amount of flexible wire guide outside a multiwire buffer tube. In several embodiments, when the flexible wire guide is advanced into the multiwire buffer tube, the diameter of an internal spiral of the flexible wire guide is increased.

In various embodiments, as more wire gets stored in the wire buffer, it pulls more flexible wire guide into the buffer. The buffer can store a variable amount of flexible wire guides. Additional flexible wire guides can be stored by increasing the spiral diameter of the flexible wire guide (e.g., from about 50 mm to about 100 mm). In some embodiments, the spiral diameter of the flexible wire guide can be the maximum diameter of the outer structure. In some embodiments, more flexible wire guides can be stored in the wire buffer, even though the flexible wire guide is pressed firmly against the outer cylinder, by increasing the winding frequency of the flexible wire guide around the spiral. Certain embodiments can wind the flexible wire guide around the wire buffer at least once, such as once, or twice, or three times, or more than three times. Over the length of flexible wire guide this can account for an increased amount of flexible wire guide stored inside the buffer. In some embodiments, increasing a spiral diameter of the guide tube from about 50 mm to about 100mm can result in about 114.2 mm length of wire that can be stored in the wire buffer. When more flexible wire guide is stored in the wire buffer the amount of flexible wire guide sticking out can be shortened. In various embodiments the flexible wire guide contains a wire, and the length of guide tube in a multiwire buffer is equal to a length of wire stored in the multiwire buffer.

While specific assemblies, processes and/or systems for a wire buffer accommodating different amounts of wire storage are described above, any of a variety of assemblies, processes and/or systems can be utilized as a wire buffer accommodating different amounts of wire storage as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a wire buffer accommodating different amounts of wire storage, the techniques disclosed herein may be used in any type of additive manufacturing system. The techniques disclosed herein may be used within any of the wire buffers and/or other components as described herein.

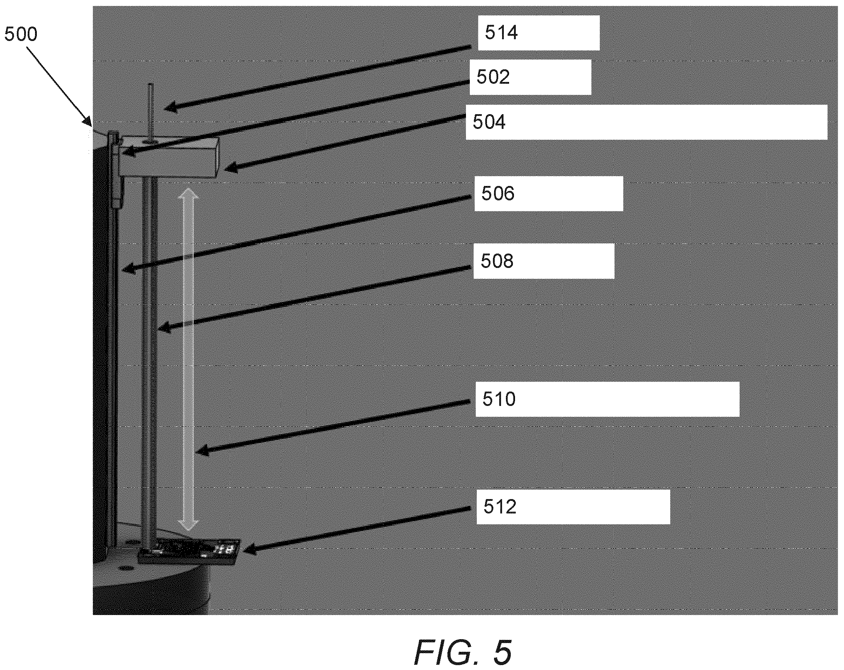

In accordance with embodiments of the invention, an amount of wire inside the buffer can be determined based on an amount of guide wire protruding from a wire buffer. In various embodiments, a measurement head can perform flexible wire guide length measurements. The measurement head components are conceptually illustrated in FIG. 5 in accordance with an embodiment. A measurement head 500 (shown in part in FIG. 5.) can include a carriage 502, a reflector 504, a rail 506, flexible wire guide 508, time of flight (TOF) laser 510, and a TOF sensor 512. The carriage 502 can be movably coupled to the rail 506. The carriage can be fixedly (e.g., preventing relative motion) coupled to the guide tube 508. A feed wire 514 can run inside of the flexible wire guide 508. An advancement of the carriage 502 corresponds (e.g., on a one-to-one basis) to an advancement of the flexible wire guide 508. The flexible wire guide 508 can accumulate inside a wire buffer accumulator (e.g., a multiwire buffer tube) as it is advanced. The TOF sensor 512 can be positioned to measure a distance between the TOF sensor 512 and the carriage 504. A measurement provided by the TOF sensor can be made along a measurement axis. The measurement can be parallel to the longitudinal axis of the guide tube 508. In various embodiments, the quantity of wire buffered inside a wire buffer can be determined based on a TOF measurement (e.g., as described elsewhere herein).

In accordance with many embodiments of the invention, a measurement head can have a radial array of distance measurement devices (e.g. one of which is depicted in FIG. 5). In some embodiments, the purpose of each subunit of the radial array of distance measurement devices is to measure the length of the guide tube protruding from the multiwire buffer tube. The length of the protruding guide tube can be equivalent to the amount of feed wire within the system. In many embodiments, a rail and a carriage can include a linear rail to constrain the motion of the guide tube to one axis so it can be easily measured. A TOF sensor can, in various embodiments, read the distance to the reflector. This distance can then be sent out of the sensor to a computer system. This distance can be a measurement of, or can correspond to, the amount of wire within the buffer.

While specific assemblies, processes and/or systems for measurement head components are described above, any of a variety of assemblies, processes and/or systems can be utilized as measurement head components as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to measurement head components, the techniques disclosed herein may be used in any type of additive manufacturing system. The techniques disclosed herein may be used within any of the wire buffers and/or other components as described herein.

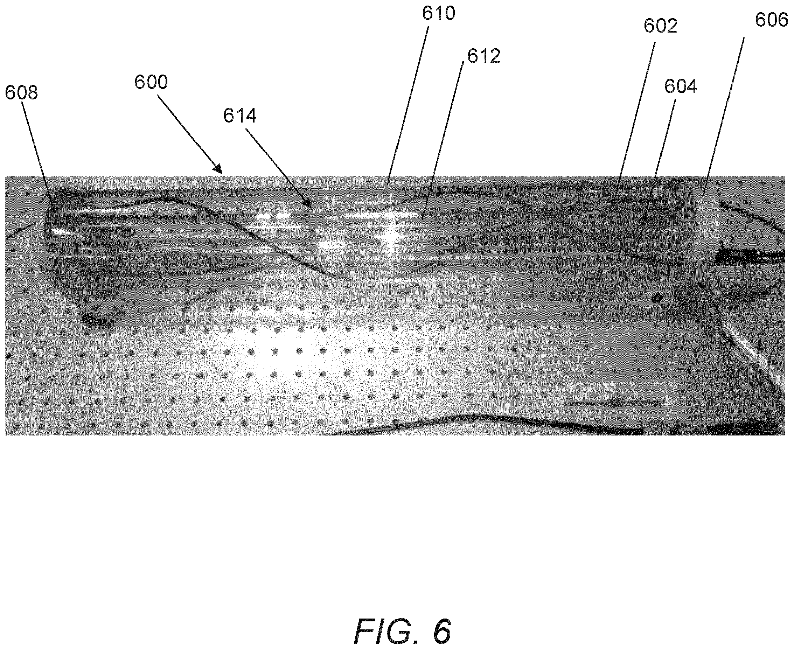

A multiwire spiral buffer is conceptually illustrated in FIG. 6 in accordance with an embodiment. The depicted example shows a multiwire buffer 600 that includes a first flexible wire guide 602, a second flexible wire guide 604, a proximal end 606, and a distal end 608. In various embodiments, multiwire buffers can accommodate 1 or more (e.g., up to 12) flexible wire guides. There can be two end caps, a proximal end 606, and a distal end 608. End caps can serve as mounting bracketry to hold an entire multiwire spiral buffer together. Between the end caps 606 and 608 can be an outer cylinder 610. The outer cylinder 610 can determine a limit that can be the maximum allowable space (e.g., maximum radial expansion) that the flexible wire guides (e.g., flexible wire guide 602, flexible wire guide 604, and/or other flexible wire guides) can fill. An inner cylinder 612 can, with the outer cylinder 610 define an inner space 614 of a multiwire buffer.

In accordance with various embodiments of the invention, wire buffer tubes can hold wires (e.g., one wire for each flexible wire guide) in place and act as guides for the wire. This can be beneficial to ensure the wire is easy to load. Wire buffer tubes can be constrained at proximal ends and free to move along distal ends in accordance with embodiments of the invention. As the wire fills the multiwire buffer, the multiwire buffer can pull or push the flexible wire guide(s) into the cavity (e.g., the inner space, the inner space 614) between the two end caps and the inner and outer cylinder. The flexible wire guide can protrude from the proximal end or the distal end of the buffer. Adding wire can move the flexible wire guide into the buffer, and removing wire can move the flexible wire guide out of the buffer. The flexible wire guides can move between inner and outer cylinders. The flexible wire guides can cinch down on the inner cylinder when the buffer is empty, and/or can expand outwards to an outer cylinder when/as the wire buffer is filled. The end of the flexible wire guide that is free can be measured, so that the amount of wire in the flexible wire guides can be estimated, in many embodiments. In several embodiments, each flexible wire guide can enter the multiwire buffer inner space at a proximal side of the multiwire buffer (e.g., through a passage), spiral around an inner structure (e.g., the inner cylinder) and/or be fixed (e.g., at an entry passage) to a distal end of the multiwire buffer tube.

In some embodiments, a system can have a linear potentiometer and/or a TOF sensor to measure the buffer level of a wire buffer. In various embodiments, when a multiwire buffer has multiple wires, those wires each differ from each other in terms of diameters and/or materials. In certain embodiments, a first flexible wire guide can have a wire of about 1.75 mm in diameter, and a second flexible wire guide can have an aluminum wire of about 1.2 mm in diameter.

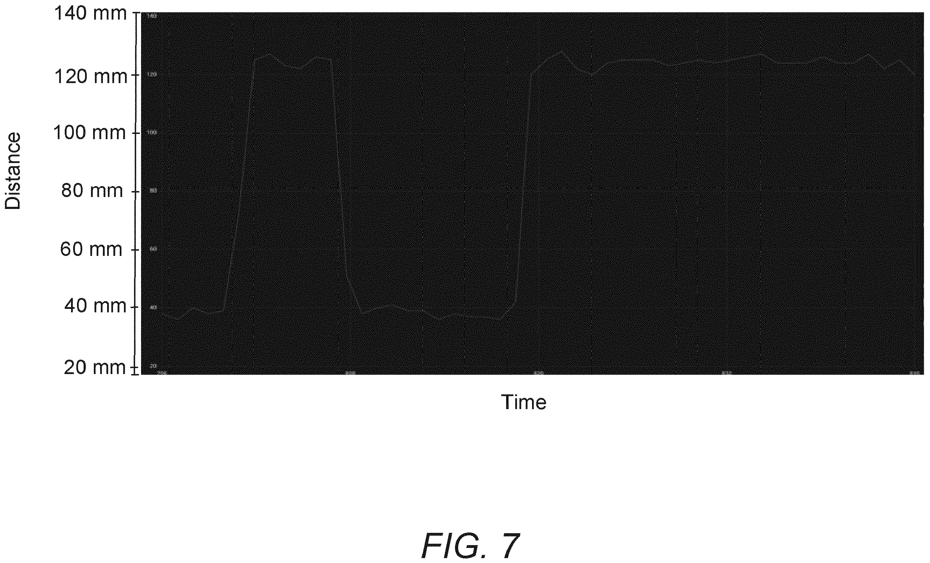

A chart depicting the amount of wire buffered in a wire buffer is conceptually illustrated in FIG. 7 in accordance with an embodiment. In various embodiments, a process can determine an amount of wire buffered in a wire buffer based on data received from a TOF sensor. FIG. 7 shows TOF sensor data. In FIG. 7, when the entering wire is accommodated in the sensor the distance drops to about 37 mm. In FIG. 7, when the final motor speeds up the wire buffer empties, and the data goes up to about 128 mm.

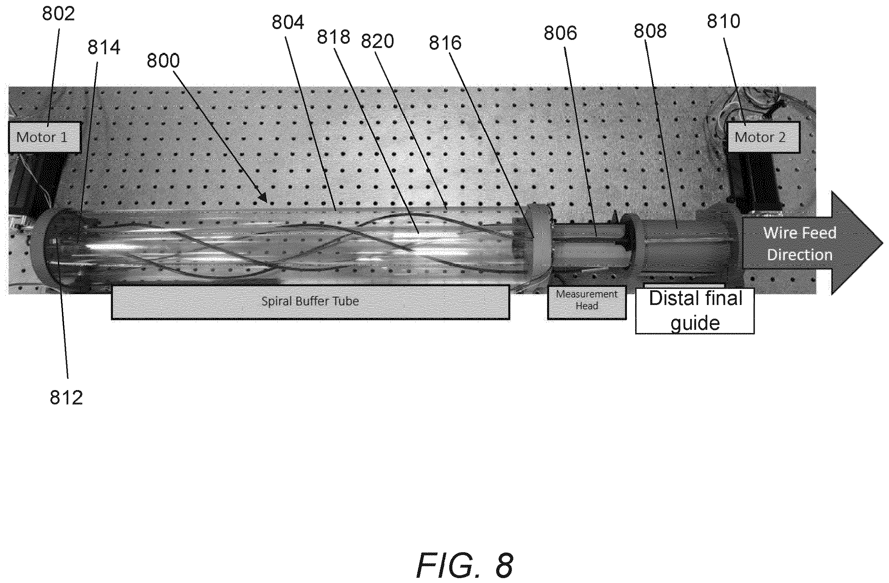

In accordance with various embodiments of the invention, a multiwire buffer system can include a de-spooling motor, a spiral buffer tube, a measurement head, a distal final guide, and/or a final motor. Buffer (e.g., multiwire buffer) systems can be configured to couple to a robotic arm and/or an additive manufacturing torch. Buffer systems can be suitable, in many embodiments, for providing one or more wires for a WAAM process and/or another additive manufacturing process. A multiwire buffer system is conceptually illustrated in FIG. 8 in accordance with an embodiment. A multiwire buffer system 800 can include a de-spooling motor 802, a spiral buffer tube 804, a measurement head 806, a distal final guide 808, and/or a final motor 810. The de-spooling motor 802 can advance a wire from a wire source (e.g., a spool) into the spiral buffer tube 804. The wire can be advanced into an entry passage 812. The entry passage 812 can be fixedly coupled to a flexible wire guide 814. The wire can be advanced through (e.g., along a passage inside a flexible wire guide) the flexible wire guide 814. The flexible wire guide 814 can pass through an exit passage 816 on an end of the spiral buffer tube opposite the entry passage 812. The entry passage 812 and the exit passage 816 can be offset about 180 degrees. The flexible wire guide 814 can move through the exit passage 816 and into the measurement head 806.

In accordance with many embodiments of the invention, a multiwire buffer can accommodate the buffering of one or more (e.g., 1, 2, 12 or another number) wires. Multiwire buffers can include, for each wire that the multiwire buffer can accommodate, an entry passage, a flexible wire guide, an exit passage, a stick out measurement system (e.g., a portion of the measurement head for measuring a flexible wire guide position), and/or a final guide tube.

The spiral buffer tube 804 can have an internal structure 818 (e.g., a tube) and an outer structure 820 (e.g., a tube). The internal structure 818 and the external structure 820 can be concentric, have a common longitudinal axis, and can be hollow tubes. The flexible wire guide 814 can spiral around the internal structure 818 and be contained between an inner surface of the outer structure 820 and an outer surface of the inner structure 818. The flexible wire guide 814 is arranged in a spiral to guide a wire contained therein to a spiral movement within the buffer tube 804. The flexible wire guide 814 may be configured as, for example, a jacket, hose, or sheath. In several embodiments, an inner structure provides an anti-tangling advantage. In several embodiments the outer structure and/or inner structure can be formed of a transparent material. This can be advantageous for visual inspection of a wire buffer system.

In accordance with several embodiments of the invention, a measurement head can include a flexible wire guide stick-out length (e.g., a length of flexible wire guide sticking out of the multiwire buffer tube) measuring system for each wire accommodated by a multiwire buffer system. As depicted in FIG. 8, a wire can be fed into a wire buffer at an entry passage side and can leave the buffer system through a final guide side. In several embodiments, the radius of the bend in the wire can be around 7-11 inches.

While specific assemblies, processes and/or systems for a multiwire buffer system are described above, any of a variety of assemblies, processes and/or systems can be utilized as a multiwire buffer system as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a multiwire buffer system, the techniques disclosed herein may be used in any type of additive manufacturing system. The techniques disclosed herein may be used within any of the wire buffers and/or other components as described herein.

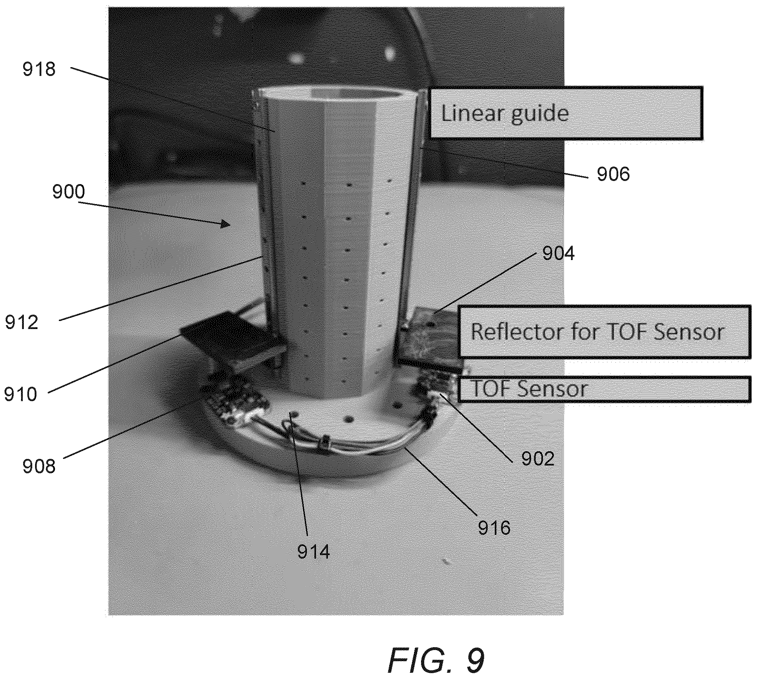

In several embodiments, a multiwire buffer system can include a measurement head. A measurement head is conceptually illustrated in FIG. 9 in accordance with an embodiment. A measurement head can, in various embodiments, be a multiwire measurement head. A multiwire measurement head can be configured to measure a length of flexible wire guide for each wire accommodated by a multiwire buffer. In some embodiments, a multiwire measurement head can include, for each accommodated wire, a linear guide, a reflector for a TOF sensor and/or a TOF sensor. A measurement head 900 can include a first TOF sensor 902, a first TOF reflector 904, and a first linear guide 906. The measurement head 900 can also include second TOF sensor 908, a second TOF reflector 910, and a second linear guide 912. In numerous embodiments, the TOF reflectors are configured to be coupled to a flexible wire guide. The measurement head 900 can include a body. The body can have exit passages 914 around a circumference at a first portion 916. The first end 916 can mount the first and second TOF sensors 902, 908. A second portion 918 can extend from the first portion 916. The first and second linear guides 906, 912 can be mounted to the second portion 918. The first and second reflectors 904, 910 can be coupled, and can travel along the first and second linear guides 906, 912 respectively. In accordance with many embodiments, a longitudinal axis of an exit passage (e.g., exit passage 914) can be parallel with a longitudinal axis of a linear guide.

While specific assemblies, processes and/or systems for a measurement head are described above, any of a variety of assemblies, processes and/or systems can be utilized as a measurement head as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a measurement head, the techniques disclosed herein may be used in any type of additive manufacturing system. The techniques disclosed herein may be used within any of the wire buffers and/or other components as described herein.

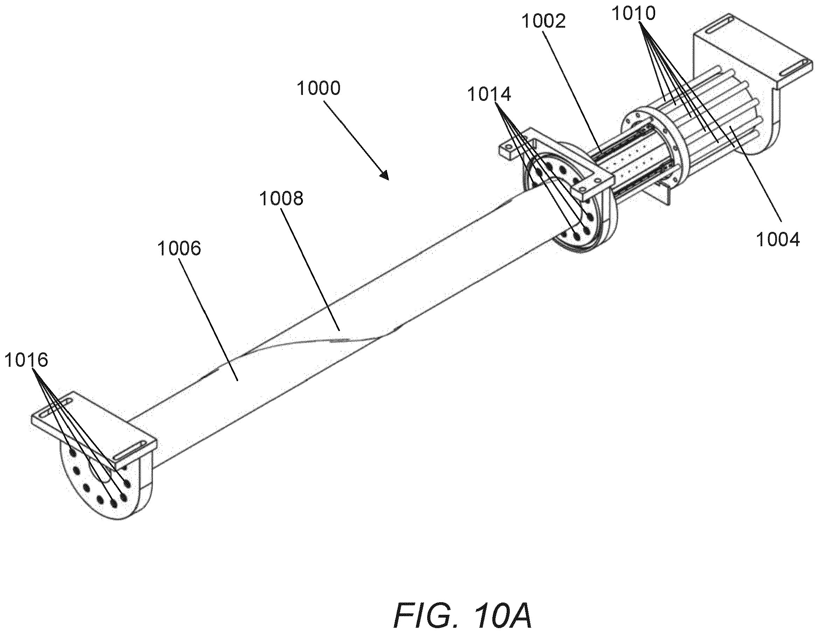

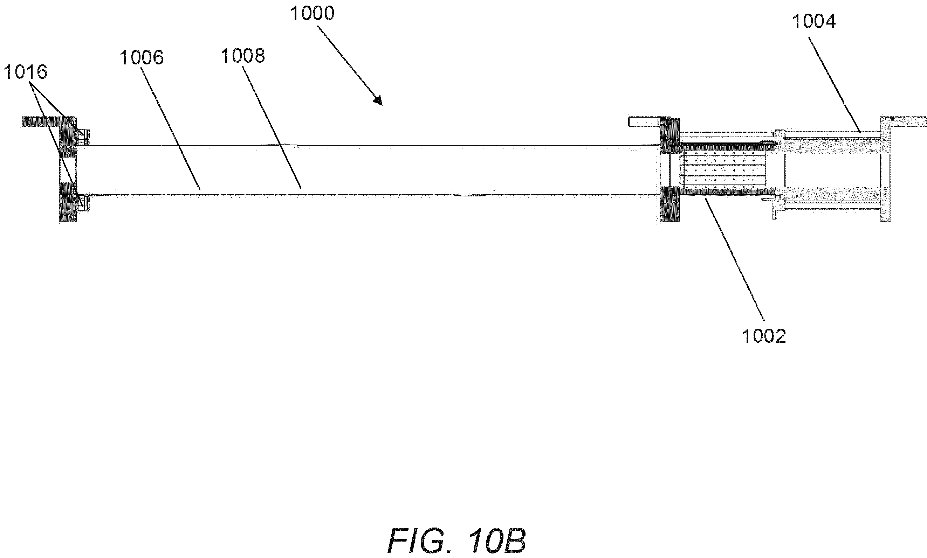

A multiwire buffer can include a multiwire buffer tube, a measurement head, and/or a distal flexible wire guide. A multiwire buffer with an outer cylinder and flexible wire guide hidden is conceptually illustrated in FIGs. 10A-10B in accordance with an embodiment. A multiwire buffer 1000 can include a measurement head 1002, a multiwire buffer tube 1004 and a distal flexible wire guide 1006.The multiwire buffer tube 1004 can include an inner cylinder 1008. The distal flexible wire guide 1006 can include a final tube 1010 for each of a number (e.g., 12) of wires. The multiwire buffer tube 1004 can include an entry passage 1012 and a wire exit passage 1014 for each of a number (e.g., 12) of wires.

In various embodiments, wire buffers can include brackets. Brackets can be suitable for attaching wire buffers to robots.

While specific assemblies, processes and/or systems for a multiwire buffer are described above, any of a variety of assemblies, processes and/or systems can be utilized as a multiwire buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a multiwire buffer, the techniques disclosed herein may be used in any type of additive manufacturing system. The techniques disclosed herein may be used within any of the wire buffers and/or other components as described herein.

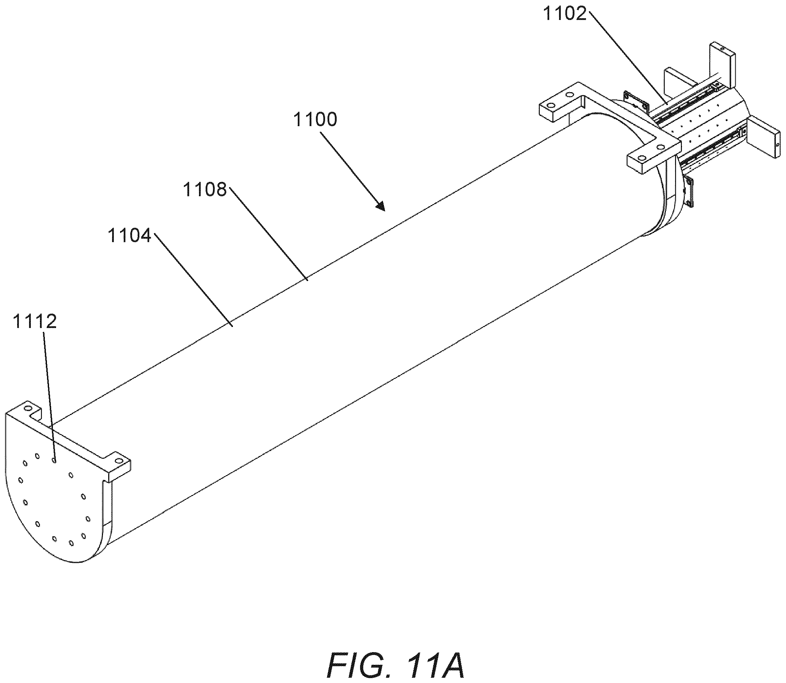

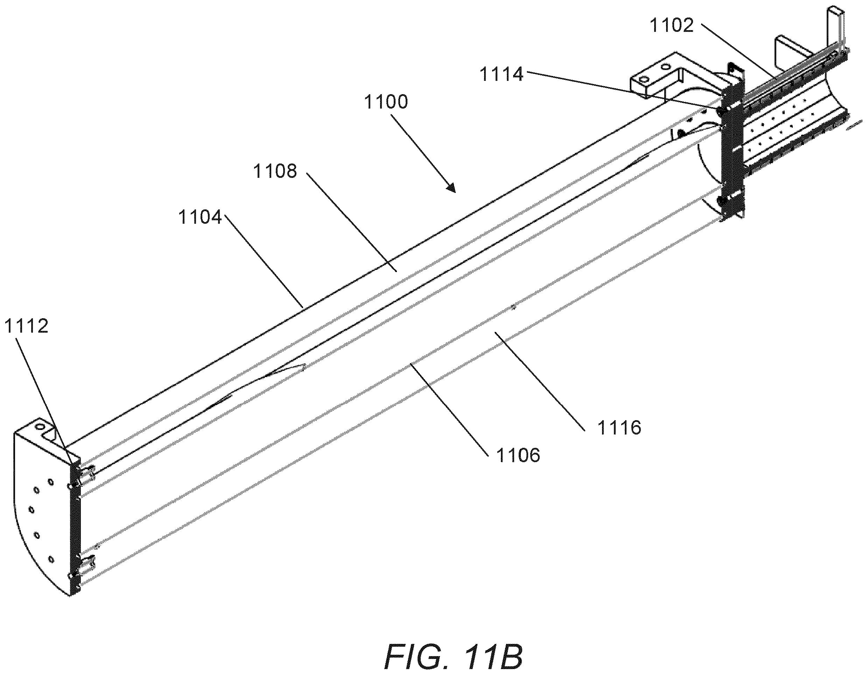

A multiwire buffer with a final tube not shown is conceptually illustrated in FIGs. 11A-11B in accordance with an embodiment. A multiwire buffer 1100 can include a measurement head 1102, and a multiwire buffer tube 1104. The multiwire buffer tube 1104 can include an inner cylinder 1106 and an outer cylinder 1108. The multiwire buffer tube 1104 can include a wire entry passage 1112, a wire exit passage 1114, and an internal space 1116 for accommodating each of a number (e.g., 12) of wires.

While specific assemblies, processes and/or systems for a multiwire buffer are described above, any of a variety of assemblies, processes and/or systems can be utilized as a multiwire buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a multiwire buffer, the techniques disclosed herein may be used in any type of additive manufacturing system. The techniques disclosed herein may be used within any of the wire buffers and/or other components as described herein.

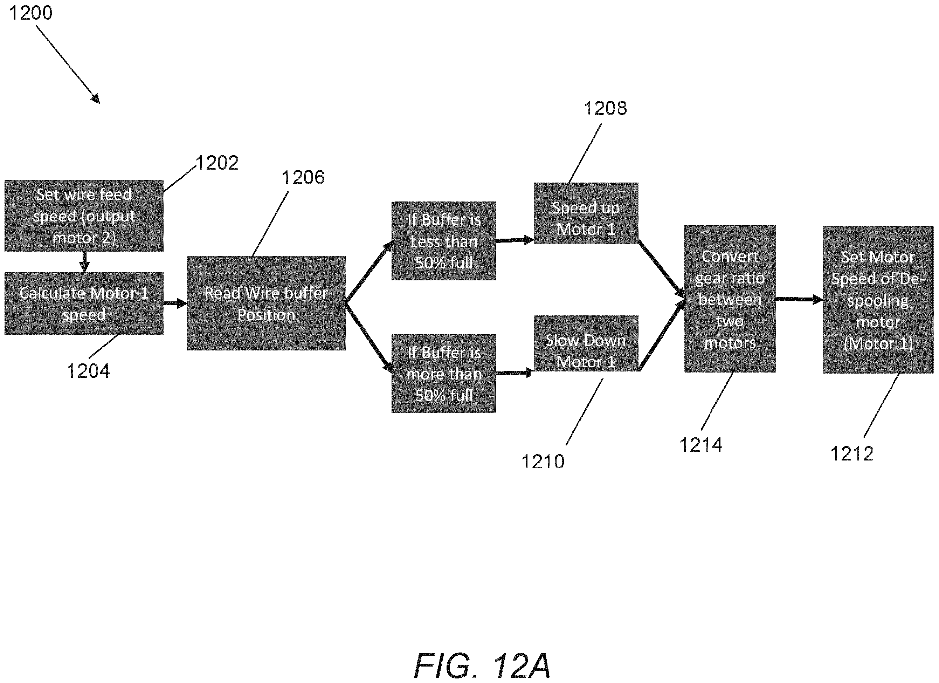

In some embodiments, a process can control feed rates (e.g., of one or more wires) into and/or out of a wire buffer. A process for controlling wire feed rates is conceptually illustrated in FIG. 12A in accordance with an embodiment. A process 1200 can set (1202) a wire feed speed. Setting a wire feed speed can include controlling a final motor speed. Final motors can control the advancement of a wire (e.g., advancement of a wire towards a deposition site in a WAAM process). In FIG. 12A, output motor 2 can refer to a final motor. Based on the wire feed speed, the process 1200 can calculate (1204) a de-spooling motor speed. A de-spooling motor can be configured to advance a wire into a wire buffer. In various embodiments, a motor speed can be calculated such that an amount of wire in a buffer is constant (e.g., wire in equal wire out). The process 1200 can read (1206) a wire buffer position. The wire buffer position reading can indicate an amount of wire currently stored in the wire buffer. In several embodiments, reading a wire buffer position can include determining an amount of wire stored based on information received from a measurement head, other wire quantity measuring system, and/or another source. When a wire buffer is determined to contain less than an amount (e.g., 50%) full, the process 1200 can speed up (1208) a motor 1 (e.g., the de-spooling motor). In many embodiments, speeding up a de-spooling motor can increase the rate at which a wire buffer accumulates wire. When a wire buffer is determined to contain more than an amount (e.g., 50%) full, the process 1200 can slow down (1210) a motor 1 (e.g., the de-spooling motor). In many embodiments, slowing down a de-spooling motor can increase the rate at which a wire buffer empties of wire. The process 1200 can change the motor 1 (e.g., de-spooling motor) speed by setting 1212 a motor speed of motor 1 based on the wire buffer position (1206) and/or the gear ratio between the two motors (1214). With respect to FIG. 12A, Motor 1 is a de-spooling (e.g., de-reeling) motor. This de-spooling can provide slack in a system. Motor 2 is the final motor and can accurately push a wire at a specified velocity. In some embodiments, a wire buffer system can improve the ability of motor 2 to accurately push a wire. In many embodiments, a wire buffer can hold excess wire so the final motor (e.g., motor 2) can easily pull the slack of a wire when needed.

In many embodiments, a process can be an algorithm configured to control one or more (e.g., two) motors. In some embodiments, the process can control multiple wire buffering rates and/or can control two motors per wire. Processes can be executed on computer systems.

In various embodiments, a user can set a velocity of a wire feeder. Motor 2 can spin in response to the setting. A corresponding speed for Motor 1 can be dynamically calculated as follows. In some embodiments, a microcontroller can determine a wire buffer position. Determining a wire buffer position can rely on a TOF laser reading the position of the wire buffer reflector. In various embodiments, when a wire buffer is full a reflector can read 10mm, when a wire buffer is empty a reflector can read 100mm, and/or when a wire-buffer is half full a reflector can read 55 mm.

In accordance with embodiments of the invention, a TOF Sensor can report its position to a microcontroller. Reporting can use an I2C (IIC) protocol. A microcontroller can compare the position to a half full position. When the wire buffer is fuller than the half position it can cause a slowdown of a de-spooling motor. When a wire buffer is at the half position the velocity can remain constant. When the wire buffer is less than half full, a microcontroller can speed up a de-spooling motor. In many embodiments, A new velocity can be determined by a computer system. The new velocity can be a basis for a commanded velocity used to control a motor. A motor move function can be determined based on an adjustment to a velocity based upon a gear ratio of a de-spooling motor, as it is often geared down to provide more torque.

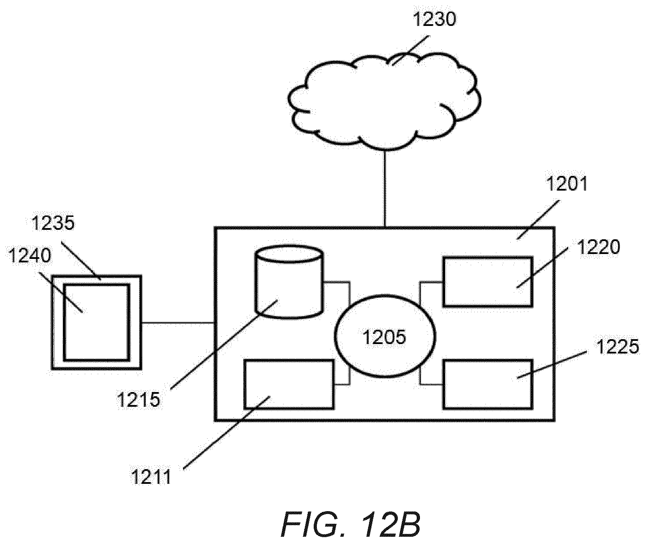

In some embodiments, the processor may be a processing unit of a computer system. FIG. 12B shows a computer system 1201 that can be configured to implement any computing system disclosed in the present application. The computer system 1201 can comprise a mobile phone, a tablet, a wearable device, a laptop computer, a desktop computer, a central server, etc.

The computer system 1201 includes a central processing unit (CPU, also "processor" and "computer processor" herein) 1205, which can be a single core or multi core processor, or a plurality of processors for parallel processing. The CPU can be the processor as described above. The computer system 1201 also includes memory or memory location 1211 (e.g., random-access memory, read-only memory, flash memory), electronic storage unit 1215 (e.g., hard disk), communication interface 1220 (e.g., network adapter) for communicating with one or more other systems, and peripheral devices 1225, such as cache, other memory, data storage and/or electronic display adapters. In some cases, the communication interface may allow the computer to be in communication with another device such as the imaging device or audio device. The computer may be able to receive input data from the coupled devices for analysis. The memory 1211, storage unit 1215, interface 1220 and peripheral devices 1225 are in communication with the CPU 1205 through a communication bus (solid lines), such as a motherboard. The storage unit 1215 can be a data storage unit (or data repository) for storing data. The computer system 1201 can be operatively coupled to a computer network ("network") 1230 with the aid of the communication interface 1220. The network 1230 can be the Internet, an internet and/or extranet, or an intranet and/or extranet that is in communication with the Internet. The network 1230 in some cases is a telecommunication and/or data network. The network 1230 can include one or more computer servers, which can enable distributed computing, such as cloud computing. The network 1230, in some cases with the aid of the computer system 1201, can implement a peer-to-peer network, which may enable devices coupled to the computer system 1201 to behave as a client or a server.

The CPU 1205 can execute a sequence of machine-readable instructions, which can be embodied in a program or software. The instructions may be stored in a memory location, such as the memory 1211. The instructions can be directed to the CPU 1205, which can subsequently program or otherwise configure the CPU 1205 to implement methods of the present disclosure. Examples of operations performed by the CPU 1205 can include fetch, decode, execute, and writeback.

Methods and systems of the present disclosure can be implemented by way of one or more algorithms. An algorithm can be implemented by way of software upon execution by the central processing unit 1205. The algorithm can, for example, partition a computer model of a part according to a hierarchy, receive user inputted data for modifying one or more parameters and produce a machine code.

The CPU 1205 can be part of a circuit, such as an integrated circuit. One or more other components of the system 1201 can be included in the circuit. In some cases, the circuit is an application specific integrated circuit (ASIC).

The storage unit 1215 can store files, such as drivers, libraries and saved programs. The storage unit 1215 can store user data, e.g., user preferences and user programs. The computer system 1201 in some cases can include one or more additional data storage units that are external to the computer system 1201, such as located on a remote server that is in communication with the computer system 1201 through an intranet or the Internet.

The memory 1211 can be a volatile or non-volatile, magnetic, semiconductor, tape, optical, removable, non-removable, or other type of storage device or tangible and/or non-transitory computer-readable medium that stores programs, such as the interactive slicer and operating system. Common forms of non-transitory media include, for example, a flash drive, a flexible disk, a hard disk, a solid state drive, magnetic tape or other magnetic data storage medium, a CD-ROM or other optical data storage medium, any physical medium with patterns of holes, a RAM, a PROM, and EPROM, a FLASH-EPROM or other flash memory, NVRAM, a cache, a register or other memory chip or cartridge, and networked versions of the same.

The memory 1211 may store instructions that enable processor to execute one or more applications, such as the interactive slicer and operating system, and any other type of application or software available or executable on computer systems. Alternatively, or additionally, the instructions, application programs, etc. can be stored in an internal and/or external database (e.g., a cloud storage system - not shown) that is in direct communication with computing device, such as one or more databases or memories accessible via one or more networks (not shown). The memory 1211 can include one or more memory devices that store data and instructions usable to perform one or more features provided herein. The memory 1211 can also include any combination of one or more databases controlled by memory controller devices (e.g., servers, etc.) or software, such as document management systems, Microsoft SQL databases, SharePoint databases, Oracle^{™} databases, Sybase^{™} databases, or other relational databases. Data used in the slicing process such as hierarchies, rules for portioning a model corresponding to each hierarchy, valid range for some or all of the parameters, printer configurations, printer specifications, and the like may be stored in the one or more databases.

The computer system 1201 may be communicatively connected to one or more remote memory devices (e.g., remote databases - not shown) through a network. The remote memory devices can be configured to store information that computer system 1201 can access and/or manage. By way of example, the remote memory devices may be document management systems, Microsoft SQL database, SharePoint databases, Oracle^{™} databases, Sybase^{™} databases, Cassandra, HBase, or other relational or non-relational databases or regular files. Systems and methods provided herein, however, are not limited to separate databases or even to the use of a database.

The computer system 1201 can communicate with one or more remote computer systems through the network 1230. For instance, the computer system 1201 can communicate with a remote computer system of a user. Examples of remote computer systems include personal computers, slate or tablet PC's, smart phones, personal digital assistants, and so on. The user can access the computer system 1201 via the network 1230.

Methods as described herein can be implemented by way of machine (e.g., computer processor) executable code stored on an electronic storage location of the computer system 1201, such as, for example, on the memory 1211 or electronic storage unit 1215. The machine executable or machine-readable code can be provided in the form of software. During use, the code can be executed by the processor 1205. In some cases, the code can be retrieved from the storage unit 1215 and stored on the memory 1211 for ready access by the processor 1205. In some situations, the electronic storage unit 1215 can be precluded, and machine-executable instructions are stored on memory 1211.

The code can be pre-compiled and configured for use with a machine having a processor adapted to execute the code, or can be compiled during runtime. The code can be supplied in a programming language that can be selected to enable the code to execute in a pre-compiled or as- compiled fashion.

Aspects of the systems and methods provided herein, such as the computer system 1201, can be embodied in programming. Various aspects of the technology may be thought of as "products" or "articles of manufacture" typically in the form of machine (or processor) executable code and/or associated data that is carried on or embodied in a type of machine readable medium. Machine- executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 1201 can include or be in communication with an electronic display 835 that comprises a user interface 1240 for providing, for example, a scanning interface or a footwear purchase interface. Examples of UI's include, without limitation, a graphical user interface (GUI) and web-based user interface. Alternatively, the user interface may be a separate user interface.

Methods and systems of the present disclosure can be implemented by way of one or more algorithms. An algorithm can be implemented by way of software upon execution by the central processing unit 1205.

While specific assemblies, processes and/or systems for a process for controlling wire feed rates are described above, any of a variety of assemblies, processes and/or systems can be utilized as a process for controlling wire feed rates as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a process for controlling wire feed rates, the techniques disclosed herein may be used in any type of additive manufacturing system. The techniques disclosed herein may be used within any of the wire buffers and/or other components as described herein.

### Multiwire Buffer Formed Based on Single-Wire Buffers in Parallel

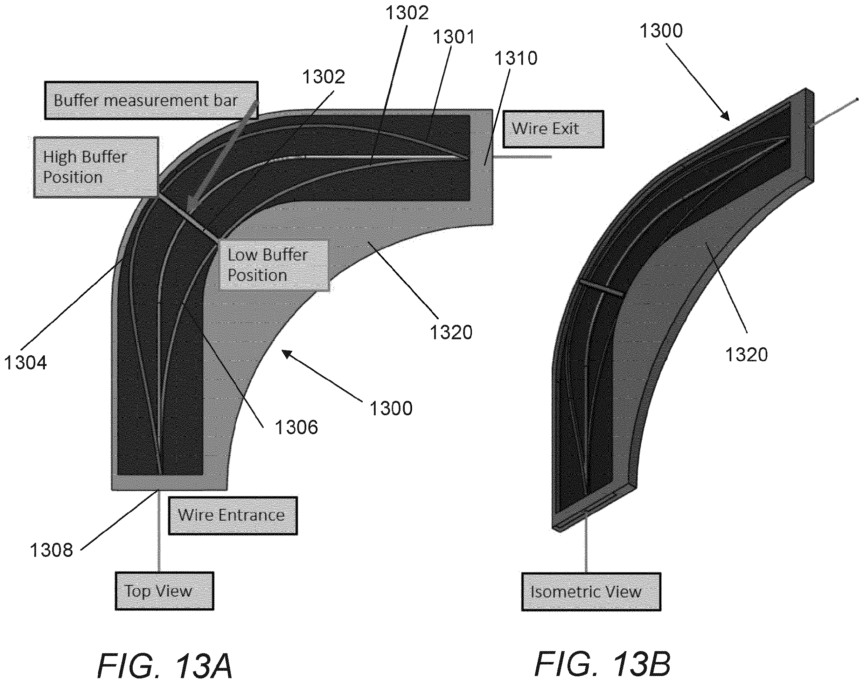

In various embodiments of the invention, a multiwire buffer can include a set of curved (e.g., banana-shaped) single-wire buffers arranged in parallel. A curved single-wire buffer suitable for incorporation into a multiwire parallel buffer is conceptually illustrated in FIGs. 13A-13B. A single-wire buffer 1300 can include a buffer measurement bar 1302. The buffer measurement bar 1302 can measure a position of a wire from a high position 1304 to a low position 1306. In various embodiments, the high position corresponds to a maximum wire capacity of the buffer. In many embodiments, the low position corresponds to a minimum wire capacity of the buffer. The single-wire buffer can further include a wire entrance 1308 and a wire exit 1310. In FIGs. 13A and 13B: the line 1301 is the position of the wire when fully buffered (+100mm); the line 1302 is the position when the buffer is empty (-100mm); and the amount of wire able to be buffered is 100-200mm. A buffer measurement bar can be a measurement device. A buffer measurement bar can be a linear potentiometer, a rotational potentiometer, a TOF sensor and/or some other method of measuring the difference between wire positions.

In some embodiments, buffer electronics can be integrated into the curved single-wire buffers. Buffer electronics 1320 can be integrated into the flat profile of the single-wire buffer 1300. The electronics 1320 can be as flat as the rest of the buffer, making it easier to stack multiple buffers.

In some embodiments, wire can be buffered or stored in a single-wire buffer (e.g., as shown in FIGs. 13A and 13B) in a bend or curve.

While specific assemblies, processes and/or systems for a banana single-wire buffer suitable for incorporation into a multiwire parallel buffer are described above, any of a variety of assemblies, processes and/or systems can be utilized as a curved single-wire buffer suitable for incorporation into a multiwire parallel buffer as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to a curved single-wire buffer suitable for incorporation into a multiwire parallel buffer, the techniques disclosed herein may be used in any type of additive manufacturing system. The techniques disclosed herein may be used within any of the wire buffers and/or other components as described herein.

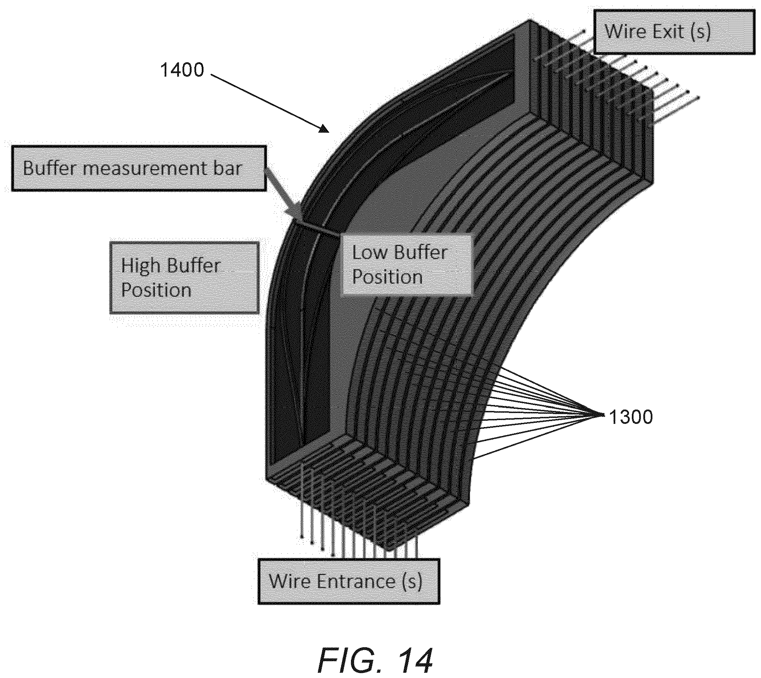

A multiwire parallel curved buffer formed of multiple attached single-wire curved buffers is conceptually illustrated in FIG 14 in accordance with an embodiment. A multiwire banana buffer 1400 can include many single-wire buffers 1300 arranged in parallel. In several embodiments a latching mechanism and/or a hinge can allow the multiwire curved buffer to open. In some embodiments, a multiwire parallel curved can open like a book and/or can slide so the individual wire holders (e.g., the single-wire curved buffer sub-systems) can be slid apart to view and/or load each wire.

While specific assemblies, processes and/or systems for a multiwire parallel banana buffer formed of multiple attached single-wire banana buffers are described above, any of a variety of assemblies, processes and/or systems can be utilized as multiwire parallel banana buffer formed of multiple attached single-wire banana buffers as appropriate to the requirements of specific applications. In certain embodiments, steps and/or components may be performed and/or configured in any order, sequence, and/or configuration not limited to the order, sequence and/or configuration shown and described. In a number of embodiments, some of the above steps may be executed or performed substantially simultaneously where appropriate or in parallel to reduce latency and processing times. In some embodiments, one or more of the above steps and/or components can be rearranged or omitted. Although the above embodiments of the invention are described in reference to multiwire parallel banana buffer formed of multiple attached single-wire banana buffers, the techniques disclosed herein may be used in any type of additive manufacturing system. The techniques disclosed herein may be used within any of the wire buffers and/or other components as described herein.

In accordance with many embodiments of the invention the multiwire buffer can be a wire buffer with a single wire. The multiwire buffer can be an assembly capable of buffering one or more wires for use in an additive manufacturing system. Flexible wire guides can be small polytetrafluoroethylene (or other material) tube that can guide a wire through a multiwire buffer. An inner cylinder can constrain an inner space that a flexible wire guide can occupy. An outer cylinder can constrain an inner space that a flexible wire guide can occupy.

### DOCTRINE OF EQUIVALENTS

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

As used herein, the singular terms "a," "an," and "the" may include plural referents unless the context clearly dictates otherwise. Reference to an object in the singular is not intended to mean "one and only one" unless explicitly so stated, but rather "one or more."

In this disclosure, the words "including," "such as," "e.g.," and related terms are not closed-ended and should be interpreted as having the explanatory language "but not limited to." Likewise, the term "include" is not closed-ended and should be interpreted such that what proceeds is not limiting on the term that precedes.

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

### Example Clauses

Examples are set out in the following clauses:
1. A wire buffer capable of buffering one or more wires, the wire buffer comprising:
   a buffer tube, the buffer tube comprising:
      an entry passage;
      an exit passage;
      an outer cylinder;
      an inner cylinder fixed in a position coaxial with the outer cylinder; and
      a flexible wire guide coupled to the entry passage, the flexible wire guide extending in a spiral around the inner cylinder and exiting the buffer tube through the exit passage; wherein the flexible wire guide occupies a space between the outer cylinder and the inner cylinder; and
   a measurement head configured to measure an amount of wire in the wire buffer.
2. The wire buffer of clause 1, wherein the exit passage is rotated greater than or equal to 0 degree and less than or equal to 180 degrees relative to the entry passage.
3. The wire buffer of clause 1 or 2, wherein the flexible wire guide can translate relative to the exit passage.
4. The wire buffer of any preceding clause, wherein the wire buffer is configured to receive the wire through the entry passage and into the flexible wire guide.
5. The wire buffer of any preceding clause, further comprising a second entry passage, a second guide tube, and a second exit passage.
6. The wire buffer of any preceding clause, wherein the measurement head comprises a time-of-flight (TOF) sensor; a linear rail, and a carriage fixedly coupled to the flexible wire guide and movably mounted to the linear rail along a measurement axis of the TOF sensor.
7. The wire buffer of clause 6, further comprising a second TOF sensor, a second linear rail and a second carriage.
8. The wire buffer of clause 6 or 7, wherein the TOF sensor is configured to measure an amount of the flexible wire guide stored inside the wire buffer.
9. The wire buffer of any preceding clause, wherein the wire buffer is configured to buffer a plurality of wires.
10. The wire buffer of any preceding clause, wherein the wire buffer is configured to buffer a plurality of wires simultaneously.
11. The wire buffer of any preceding clause, wherein the wire buffer is configured to buffer the wire by accumulating the flexible wire guide between the inner cylinder and the outer cylinder.
12. The wire buffer of any preceding clause, wherein the wire buffer is configured to buffer the wire by accumulating the flexible wire guide between the inner cylinder and the outer cylinder, wherein accumulating the flexible wire guide increases a spiral diameter of the flexible wire guide.
13. The wire buffer of any preceding clause, wherein the wire buffer is configured to buffer the wire by accumulating the flexible wire guide between the inner cylinder and the outer cylinder, wherein accumulating the flexible wire guide increases a spiral diameter of the flexible wire guide from 50 mm to 100 mm.
14.A wire buffer system for advancing one or more wires into a deposition site, the wire buffer system comprising:
   a wire buffer;
   a de-spooling motor configured to feed a wire into the wire buffer; and
   a motor configured to advance the wire out of the wire buffer;
   wherein the wire buffer comprising:
      a buffer tube, the buffer tube comprising:
         an entry passage;
         an exit passage;
         an outer cylinder;
         an inner cylinder, the inner cylinder fixed in a position coaxial with the outer cylinder; and
         a flexible wire guide fixedly coupled to the entry passage, the flexible wire guide extending in a spiral around the inner cylinder and exiting the buffer tube through the exit passage and wherein the flexible wire guide occupies a space between the outer cylinder and the inner cylinder; and
      a measurement head configured to measure an amount of wire in the wire buffer.
15. The wire buffer system of clause 14, wherein the exit passage is rotated greater than or equal to 0 degree and less than or equal to 180 degrees relative to the entry passage.
16.The wire buffer system of clause 14 or 15, wherein the flexible wire guide is configured to translate relative to the exit passage.
17.The wire buffer system of any of clauses 14 to 16, wherein the wire buffer is configured to receive the wire through the entry passage and into the flexible wire guide.
18.The wire buffer system of any of clauses 14 to 17, further comprising a second entry passage, a second flexible wire guide, and a second exit passage.
19. The wire buffer system of any of clauses 14 to 18, wherein the measurement head comprises: a TOF sensor, a linear rail, and a carriage fixedly coupled to the flexible wire guide and movably mounted to the linear rail along a measurement axis of the TOF sensor.
20.The wire buffer system of clause 19, further comprising a second TOF sensor, a second linear rail and a second carriage.
21.The wire buffer system of clause 19 or 20, wherein the TOF sensor is configured to measure an amount of flexible wire guide stored inside the wire buffer.
22.The wire buffer system of any of clauses 14 to 21, wherein the wire buffer is configured to buffer a plurality of wires.
23.The wire buffer system of any of clauses 14 to 22, wherein the wire buffer is configured to buffer the wire by accumulating the flexible wire guide between the inner cylinder and the outer cylinder.
24.The wire buffer system of any of clauses 14 to 23, wherein the wire buffer is configured to buffer the wire by accumulating the flexible wire guide between the inner cylinder and the outer cylinder, wherein accumulating the flexible wire guide increases a spiral diameter of the flexible wire guide.
25.The wire buffer system of any of clauses 14 to 24, wherein the wire buffer is configured to buffer the wire by accumulating the flexible wire guide between the inner cylinder and the outer cylinder, wherein accumulating the flexible wire guide increases a spiral diameter of the flexible wire guide from 50 mm to 100 mm.
26. The wire buffer system of any of clauses 14 to 25, further comprising a second de-spooling motor.
27.A wire buffer system for advancing two or more wires into a deposition site, the wire buffer system comprising:
   a wire buffer;
   a first de-spooling motor configured to feed a first wire into the wire buffer;
   a second de-spooling motor configured to feed a second wire into the wire buffer;
   a motor configured to advance the first wire and the second wire out of the wire buffer; and
   wherein the wire buffer comprises:
      a buffer tube, the buffer tube comprising:
         a first entry passage;
         a first exit passage;
         a second entry passage;
         a second exit passage;
         an outer cylinder;
         an inner cylinder, the inner cylinder fixed in a position coaxial with the outer cylinder;
         a first flexible wire guide fixedly coupled to the first entry passage, the first flexible wire guide extending in a spiral around the inner cylinder and exiting the buffer tube through the first exit passage and wherein the first flexible wire guide occupies a space between the outer cylinder and the inner cylinder; and
         a second flexible wire guide fixedly coupled to the second entry passage, the second flexible wire guide extending in a spiral around the inner cylinder and exiting the buffer tube through the second exit passage and wherein the second flexible wire guide occupies a space between the outer cylinder and the inner cylinder; and
      a measurement head configured to measure an amount of the first wire and the second wire in the wire buffer respectively.
28.The wire buffer of clause 27, wherein the first exit passage is rotated from greater than or equal to 0 degree to less than or equal to 180 degrees relative to the first entry passage.
29. The wire buffer of clause 27 or 28, wherein the first flexible wire guide is configured to translate relative to the first exit passage.
30. The wire buffer of any of clauses 27 to 29, wherein the wire buffer is configured to receive the first wire through the first entry passage and into the first flexible wire guide.
31. The wire buffer system any of clauses 27 to 30, wherein the measurement head comprises:
   a first TOF sensor, a first linear rail, a first carriage fixedly coupled to the first flexible wire guide and movably mounted to the first linear rail along a first measurement axis of the first TOF sensor; and
   a second TOF sensor, a second linear rail; and a second carriage fixedly coupled to the second flexible wire guide and movably mounted to the second linear rail along a second measurement axis of the second TOF sensor.
32.The wire buffer system of clause 31, wherein the first TOF sensor is configured to measure an amount of first flexible wire guide stored inside the wire buffer.
33.The wire buffer system of any of clauses 27 to 32, wherein the wire buffer is configured to buffer the first wire by accumulating the first flexible wire guide between the inner cylinder and the outer cylinder and is configured to simultaneously buffer the second wire by accumulating the second flexible wire guide between the inner cylinder and the outer cylinder.
34.The wire buffer system of any of clauses 27 to 33, wherein the wire buffer is configured to buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively.
35.The wire buffer system of any of clauses 27 to 34, wherein the wire buffer is configured to buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively from 50 mm to 100 mm.

## Claims

1. A wire buffer capable of buffering one or more wires, the wire buffer comprising:
a buffer tube, the buffer tube comprising:
an entry passage;
an exit passage;
an outer cylinder;
an inner cylinder fixed in a position coaxial with the outer cylinder; and
a flexible wire guide coupled to the entry passage, the flexible wire guide extending in a spiral around the inner cylinder and exiting the buffer tube through the exit passage; wherein the flexible wire guide occupies a space between the outer cylinder and the inner cylinder; and
a measurement head configured to measure an amount of wire in the wire buffer.

2. The wire buffer of claim 1, further comprising a second entry passage, a second flexible wire guide, and a second exit passage.

3. The wire buffer of claim 1 or 2, wherein the measurement head comprises: a TOF sensor, a linear rail, and a carriage fixedly coupled to the flexible wire guide and movably mounted to the linear rail along a measurement axis of the TOF sensor.

4. The wire buffer of claim 3, further comprising a second TOF sensor, a second linear rail and a second carriage.

5. The wire buffer of claim 3 or 4, wherein the TOF sensor is configured to measure an amount of flexible wire guide stored inside the wire buffer.

6. The wire buffer of any preceding claim, wherein the wire buffer is configured to at least one of the following:
buffer a plurality of wires;
buffer the wire by accumulating the flexible wire guide between the inner cylinder and the outer cylinder; and
buffer the wire by accumulating the flexible wire guide between the inner cylinder and the outer cylinder, wherein accumulating the flexible wire guide increases a spiral diameter of the flexible wire guide;
buffer the wire by accumulating the flexible wire guide between the inner cylinder and the outer cylinder, wherein accumulating the flexible wire guide increases a spiral diameter of the flexible wire guide from 50 mm to 100 mm.

7. The wire buffer of any preceding claim, wherein the exit passage is rotated from greater than or equal to 0 degree to less than or equal to 180 degrees relative to the entry passage.

8. The wire buffer of any preceding claim, wherein the flexible wire guide is configured to translate relative to the exit passage.

9. The wire buffer of any preceding claim, wherein the wire buffer is configured to receive the wire through the entry passage and into the flexible wire guide.

10. A wire buffer system for advancing one or more wires into a deposition site, the wire buffer system comprising:
a wire buffer according to any preceding claim;
a de-spooling motor configured to feed a wire into the wire buffer; and
a motor configured to advance the wire out of the wire buffer.

11. The wire buffer system of claim 10, further comprising a second de-spooling motor.

12. The wire buffer system of claim 11, wherein:
the wire buffer system is configured to advance two or more wires into a deposition site;
the wire is a first wire;
the de-spooling motor is a first de-spooling motor configured to feed the first wire into the wire buffer;
the second de-spooling motor is configured to feed a second wire into the wire buffer;
the motor is configured to advance the first wire and the second wire out of the wire buffer;
the entry passage is a first entry passage;
the exit passage is a first exit passage;
the flexible wire guide is a first flexible wire guide fixedly coupled to the first entry passage, the first flexible wire guide extending in a spiral around the inner cylinder and exiting the buffer tube through the first exit passage and wherein the first flexible wire guide occupies a space between the outer cylinder and the inner cylinder;
the measurement head is configured to measure an amount of the first wire and the second wire in the wire buffer respectively; and
the buffer tube further comprises:
a second entry passage;
a second exit passage; and
a second flexible wire guide fixedly coupled to the second entry passage, the second flexible wire guide extending in a spiral around the inner cylinder and exiting the buffer tube through the second exit passage and wherein the second flexible wire guide occupies a space between the outer cylinder and the inner cylinder.

13. The wire buffer system of claim 12, wherein the measurement head comprises:
a first TOF sensor, a first linear rail, a first carriage fixedly coupled to the first flexible wire guide and movably mounted to the first linear rail along a first measurement axis of the first TOF sensor; and
a second TOF sensor, a second linear rail; and a second carriage fixedly coupled to the second flexible wire guide and movably mounted to the second linear rail along a second measurement axis of the second TOF sensor.

14. The wire buffer system of claim 13, wherein the first TOF sensor is configured to measure an amount of first flexible wire guide stored inside the wire buffer.

15. The wire buffer system of any of claims 12 to 14, wherein the wire buffer is configured to at least one of the following:
buffer the first wire by accumulating the first flexible wire guide between the inner cylinder and the outer cylinder and is configured to simultaneously buffer the second wire by accumulating the second flexible wire guide between the inner cylinder and the outer cylinder;
buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively; and
buffer the first wire and the second wire by accumulating the first flexible wire guide and the second flexible wire guide respectively between the inner cylinder and the outer cylinder, wherein accumulating the first flexible wire guide and the second flexible wire guide increases a spiral diameter of the first flexible wire guide and the second flexible wire guide respectively from 50 mm to 100 mm.
